# EUROPÄISCHE PATENTSCHRIFT

(11) **EP 1 575 734 B1**
(45) Veröffentlichungstag und Bekanntmachung des Hinweises auf die Patenterteilung: **17.12.2008**
(21) Anmeldenummer: 03757516.4
(22) Anmeldetag: 22.10.2003
(51) Int. Cl.: B23K 9/173, B23K 9/12

(54) **SCHUTZKAPPE FÜR EIN KONTAKTROHR IN EINEM SCHWEISSBRENNER SOWIE SCHWEISSBRENNER MIT EINER SCHUTZKAPPE**
PROTECTIVE CAP FOR A CONTACT PIPE IN A WELDING TORCH IN ADDITION TO A WELDING TORCH EQUIPPED WITH SAID CAP
COUVERCLE PROTECTEUR CON U POUR UN TUYAU DE CONTACT D'UN CHALUMEAU A SOUDER ET CHALUMEAU A SOUDER POURVU DE CE COUVERCLE PROTECTEUR

(30) Priorität: 12.12.2002 AT 18592002
(43) Veröffentlichungstag der Anmeldung: 21.09.2005
(73) Patentinhaber: Fronius International GmbH, 4643 Pettenbach (AT)
(72) Erfinder: WIMROITHER, Walter, A-4562 Steinbach/Ziehberg Nr. 220 (AT); LANGEDER, Harald, A-4643 Pettenbach (AT); STEINMAURER, Markus, A-4642 Sattledt (AT)
(74) Vertreter: Sonn & Partner Patentanwälte
(86) Internationale Anmeldenummer: PCT/AT2003/000318
(87) Internationale Veröffentlichungsnummer: WO 2004/052581

(56) Entgegenhaltungen:
- WO-A-97/45227
- FR-A- 2 512 717
- GB-A- 999 509

## Beschreibung

Die Erfindung betrifft eine Schutzkappe nach dem Oberbegriff des Anspruchs 1. (Siehe WO-A-97 45227).

Die Erfindung betrifft weiters einen Schweißbrenner mit zumindest zwei von einer gemeinsamen Gasdüse umschlossenen Kontaktrohren, wobei jedes Kontaktrohr eine Bohrung für die Führung und Kontaktierung eines zugeführten Schweißdrahtes aufweist.

In der Schweißtechnik ergibt sich das Problem, dass bei Schweißungen sehr häufig Schweißspritzer entstehen, die an den zur Schweißstelle nächstliegenden Teilen, insbesondere dem Kontaktrohr, anhaften. Somit kann es passieren, dass es aufgrund einer Vielzahl derartiger Ablagerungen zu Kurzschlüssen zwischen einzelnen Teilen kommt. Verstärkt wird das Problem der Haftung der Schweißspritzer durch den Einsatz elektrisch gut leitender Materialien, wie beispielsweise Kupfer oder einer Kupferlegierung bzw. Messing oder einer Messinglegierung, bei denen aufgrund des Stromflusses eine Erwärmung des Materials eintritt und somit die Schweißspritzer sehr leicht an dem Kontaktrohr anhaften.

Speziell tritt dieses Problem bei Zwei- oder Mehrdraht-Schweißbrennern auf, bei denen unterschiedliche Steuerungen bzw. Regelungen für die einzelnen Schweißkreise durchgeführt werden, wobei sich hierbei zwischen den Kontaktrohren, die möglichst nahe beieinander liegen sollen, die Schweißspritzer ablegen und einen Kurzschluss aufbauen, so dass keine getrennte Steuerung oder Regelung der einzelnen Prozesse mehr möglich ist.

Um das Anhaften von Schweißspritzern zu vermeiden ist aus der DE 199 04 348 A1 eine Stromkontaktdüse bzw. ein Kontaktrohr für einen Lichtbogenschweißbrenner bekannt, wobei zumindest an der Drahtaustrittsseite eine oder mehrere verschiedene Schichten aus einem oder mehreren keramischen Werkstoffen mit 0,1 bis 0,7 mm Dicke übereinander auf der an dieser Stelle aufgerauten Oberfläche des Kontaktrohres aufgebracht sind. Diese Schichten sind elektrisch isolierend und abweisend gegen Metallspritzer. Nachteilig ist hierbei, dass durch eine derartige Beschichtung des Kontaktrohres ein erhöhter Fertigungsaufwand notwendig ist und die Lebensdauer der Kontaktdüse nur unwesentlich verlängert wird.

Weiters ist aus der DE 44 26 993 C1 eine Vorrichtung zum Sprühen eines Antihaftmittels gegen Schweißspritzer in die Gasdüse eines Schweißbrenners bekannt. Der Schweißbrenner weist einen Antihaftmittelbehälter auf, der mit einer Sprühdüse verbunden ist. Nachteilig ist hierbei, dass bei einem derartigen Schweißbrenner die Baugröße wesentlich vergrößert wird und eine Nachrüstung in bestehende Schweißbrenner nicht möglich ist.

Die GB 1 564 077 A beschreibt einen Schweißbrenner, bei dem die Kontaktdüse durch eine in Richtung der Schweißstelle offene Keramikhülse geschützt wird. Eine derartige Düse kann jedoch nicht die Kontaktdüse vor Schweißspritzern schützen und somit deren Betriebsdauer erhöhen. Die Schutzkappe gemäß diesem Dokument weist keine Bohrung für den Austritt des Schweißdrahtes auf.

Die DE 29 20 917 A1 zeigt eine Kontaktdüse für Schutzgasschweißbrenner, bei der zwischen dem Gasrohr und der stromführenden Kontaktdüse eine Isolierung aus Keramik angeordnet sein kann. Diese Isolierhülse dient dazu, bei Berührung des Gasrohres mit den Rändern eines Schweißspaltes einen Kurzschluss zwischen der Kontaktdüse und dem Gasrohr zu verhindern.

Die US 5 856 647 A beschreibt einen Plasma-Schweißbrenner, bei dem eine Schutzkappe angeordnet ist, welche die Düse vor Schweißspritzern schützt. Dabei ist die Öffnung in der Schutzkappe, welche bei dieser Konstruktion nicht zum Führen eines Schweißdrahtes gedacht ist, relativ groß, so dass Schweißspritzer in das Innere gelangen könnten.

Schließlich zeigt die WO 95/32832 A1 eine Kontaktdüse für einen Schweißbrenner, bei der die vordere Spitze aus einem widerstandsfähigeren Material besteht. Die Spitze der Kontaktdüse wird über Schraubverbindungen befestigt. Bei Zweidraht- oder Mehrdraht-Schweißbrennern mit zwei oder mehr Kontaktdüsen könnte auf diese Weise ein Kurzschluss zwischen den Kontaktdüsen aufgrund anhaftender Schweißspritzer nicht verhindert werden. Zudem erfordert die Konstruktion gemäß der WO 95/32832 A1 eine besondere Konstruktion des Kontaktrohres, welches die Verwendung handelsüblicher Kontaktrohre unmöglich macht.

Aus der GB 999 509 A ist eine Schutzkappe der gegenständlichen Art bekannt, welche über dem Kontaktrohr eines Schweißbrenners mit drei Schweißdrähten angeordnet ist. Die Halbkugel-förmige Spitze der Schutzkappe ist aus feuerfestem Material hergestellt oder mit einem solchen beschichtet und wird mit dem Kontaktrohr mittels einer Schraube verbunden. Die Schutzkappe ist relativ schwer zu befestigen und bietet darüber hinaus keinen Schutz vor Schweißspritzern zwischen dem Kontaktrohr und der Gasdüse, welche zu Kurzschlüssen führen können.

Die FR 2 512 717 A zeigt ein Kontaktrohr für einen Eindrahtschweißbrenner, welches mit einer Keramikbeschichtung oder einer Hülse aus Keramik vor Schweißspritzern und den hohen Temperaturen an der Schweißstelle geschützt wird, so dass eine höhere Betriebsdauer möglich wird. Dabei wird an der Stirnfläche der Kontaktrohre ein Schutzteil aus Keramikmaterial aufgeklebt, welcher das Kontaktrohr vor zu hohen Temperaturen und Schweißspritzern schützt. Durch die Klebeverbindung ist ein Auswechseln der Schutzkappe schwierig bzw. unmöglich. Die Beschichtung ist wegen der hohen Fertigungskosten nachteilig. Ein wirkungsvoller Schutz bei Zweidraht- oder Mehrdraht-Schweißbrennern wird in diesem Dokument nicht beschrieben.

Die WO 97/45227 A1 beschreibt Mehrdraht-Schweißbrenner, bei welchen die Schweißdrähte über getrennt ansteuerbare Drahtvorschubgeräte bewegbar sind.

Die Aufgabe der vorliegenden Erfindung besteht darin, die Betriebsdauer eines Kontaktrohres bzw. eines Schweißbrenners mit zumindest einem solchen Kontaktrohr wesentlich zu erhöhen.

Gelöst wird die erfindungsgemäße Aufgabe durch eine Schutzkappe gemäß Anspruch 1, wobei im Gehäuse zumindest zwei Öffnungen zur Aufnahme zumindest zweier Kontaktrohre und zumindest eine weitere Öffnung zur Aufnahme weiterer Elemente des Schweißbrenners, insbesondere zur Aufnahme eines Teilbereichs eines Brennerkörpers mit den darin befestigten Kontaktrohren, vorgesehen sind, und dass an einer Außenfläche des Gehäuses Befestigungselemente angeordnet sind, welche durch zumindest einen Steg gebildet sind, über welchen eine Klemmverbindung mit einer Gasdüse des Schweißbrenners durch Aufstecken der Schutzkappe herstellbar ist, wodurch im Bereich der Gasdüse, also am Ende des Brennerkörpers, sämtliche leitende Elemente des Schweißbrenners von der Schutzkappe abgedeckt werden, und wobei am Gehäuse Bohrungen angeordnet sind, über die ein vom Schweißbrenner zugeführtes Gas in den Bereich zwischen Gasdüse und Schutzkappe austreten kann. Durch den Einsatz einer derartigen Schutzkappe für Zweidraht- oder Mehrdrahtschweißbrenner mit zwei oder mehreren Kontaktrohren können diese vollständig gegenüber der Schweißstelle abgedeckt werden und somit ein Anhaften von Schweißspritzern unterbunden werden. Dadurch wird die Betriebsdauer eines derartigen Zweidraht- oder Mehrdrahtschweißbrenners wesentlich erhöht. Ein weiterer wesentlicher Vorteil besteht darin, dass durch die Verwendung einer solchen Schutzkappe handelsübliche Kontaktrohre ohne Nachbearbeitung verwendet werden können und somit die Kosten für diesen Verschleißteil sehr gering gehalten werden können. Eine aufwendige Beschichtung der Kontaktrohre, beispielsweise mit einer Keramikschicht, ist nicht notwendig. Abgesehen von der Vermeidung von Schweißspitzern an der Spitze der Kontaktdüse, werden durch die vorliegende Schutzkappe bei Zweidraht- oder Mehrdrahtschweißbrennern Kurzschlüsse zwischen den Kontaktdüsen wirkungsvoll unterbunden. Die entsprechende Anordnung der Bohrungen im Gehäuse der Schutzkappe für die Schweißdrähte garantieren eine reibungslose Förderung des Schweißdrahtes während des Schweißvorgangs. Die vorliegende Schutzkappe bildet somit eine kostengünstige Möglichkeit bei Zweidraht- oder Mehrdrahtschweißbrennern, die Kontaktrohre wirkungsvoll zu schützen und somit die Betriebsdauer des Schweißbrenners zu erhöhen. An einer Außenfläche des Gehäuses sind Befestigungselemente angeordnet, welche durch zumindest einen Steg gebildet sind, über welchen ein Klemmverbindung mit einer Gasdüse des Schweißbrenners durch Aufstecken der Schutzkappe herstellbar ist. Dadurch kann eine rasche Montage und Demontage der Schutzkappe an den Kontaktrohren bzw. an der Gasdüse des Schweißbrenners erfolgen. Das durch den Steg gebildete Befestigungselement stellt eine einfache und wirkungsvolle Realisierungsmöglichkeit dar. Durch die zumindest eine weitere Öffnung zur Aufnahme weiterer Elemente des Schweißbrenners werden im Bereich der Gasdüse sämtliche leitende Elemente des Schweißbrenners von der Schutzkappe abgedeckt. Durch die am Gehäuse der Schutzkappe angeordneten Bohrungen kann ein vom Schweißbrenner zugeführtes Gas in den Bereich zwischen Gasdüse und Schutzkappe austreten. Diese Bohrungen können für die unterschiedlichsten Schweißbrenner vorzugsweise korrespondierend mit den Gasaustrittsöffnungen am Schweißbrenner angeordnet sein.

Vorteilhafterweise ist das Gehäuse der Schutzkappe aus einem Material mit geringer Klebeneigung von Metallspritzern, insbesondere Schweißspritzern, gebildet. Sollte es dennoch zur Anhaftung von Schweißspritzern kommen, beeinträchtigt dies den Schweißprozess nicht wesentlich, da das Material der Schutzkappe elektrisch schlecht bzw. nicht leitend ist und es somit zu keinen Kurzschlüssen zwischen der Kontaktdüse und der Gasdüse oder zwischen den Kontaktdüsen untereinander kommen kann.

Ebenso kann das Gehäuse der Schutzkappe mit einem Material mit geringer Klebeneigung von Metallspritzern, insbesondere Schweißspritzern, beschichtet sein.

Dabei eignet sich als Material des Gehäuses bzw. der Beschichtung des Gehäuses der Schutzkappe Keramik besonders.

Gemäß einem weiteren Merkmal der Erfindung sind die Bohrungen am Gehäuse radial umlaufend angeordnet.

Die Schutzkappe kann auch so ausgeführt sein, dass zumindest ein Kontaktrohr im Gehäuse integriert ist, so dass ein sogenannter Sandwichbauteil gebildet wird.

Dabei kann zumindest ein Kontaktrohr über einen Teilbereich im Gehäuse der Schutzkappe integriert bzw. eingebettet sein.

Die integrierten Kontaktrohre bestehen vorzugsweise aus elektrisch leitendem Material, insbesondere aus Kupfer oder einer Kupferlegierung, um die elektrische Verbindung zum Schweißdraht zu ermöglichen.

Die erfindungsgemäße Aufgabe wird auch durch einen Schweißbrenner der oben angegebenen Art gelöst, wobei zumindest über einen Teilbereich der Kontaktrohre eine oben beschriebene Schutzkappe angeordnet ist.

Bevorzugterweise sind im Gehäuse der Schutzkappe zumindest eine Öffnung zur Aufnahme der Kontaktrohre und mit der zumindest einen Öffnung in Verbindung stehende Bohrungen angeordnet, wobei die Bohrungen bei in der Schutzkappe angeordneten Kontaktrohren fluchtend bzw. korrespondierend mit den Bohrungen der Kontaktrohre verlaufen, so dass die zugeführten Schweißdrähte über die Bohrungen in den Kontaktrohren und die Bohrungen der Schutzkappe zu einer Schweißstelle austreten können. Bei einem derartigen Zweidraht- oder Mehrdraht-Schweißbrenner wird die Betriebsdauer durch eine solche Ausbildung der Schutzkappe wesentlich erhöht.

Die Kontaktrohre bestehen dabei vorzugsweise aus elektrisch leitendem Material, insbesondere aus Kupfer oder einer Kupferlegierung, um die elektrische Verbindung zu den Schweißdrähten zu ermöglichen.

Die vorliegende Erfindung wird anhand der beigefügten Zeichnungen, welche ein Ausführungsbeispiel der Erfindung zeigen, näher erläutert.

Darin zeigen:
- Fig. 1: eine schematische Darstellung einer Schweißmaschine bzw. eines Schweißgerätes;
- Fig. 2: eine perspektivische Ansicht einer Schutzkappe, in vereinfachter, schematischer Darstellung;
- Fig. 3: eine weitere perspektivische Ansicht der Schutzkappe gemäß Fig. 2;
- Fig. 4: eine Vorderansicht der Schutzkappe gemäß Fig. 2;
- Fig. 5: eine Hinteransicht der Schutzkappe gemäß Fig. 2;
- Fig. 6: eine teilweise geschnittene Seitenansicht der in einer Gasdüse angeordneten Schutzkappe gemäß Fig. 2;
- Fig. 7: eine Schnittdarstellung der in der Gasdüse angeordneten Schutzkappe gemäß Fig. 6;
- Fig. 8: eine perspektivische Ansicht in vereinfachter, schematischer Darstellung eines Beispiels einer Schutzkappe, welches nicht in Schutzumfang der Ansprüche fällt.
- Fig. 9: eine weitere perspektivische Ansicht der Schutzkappe gemäß Fig. 8;
- Fig. 10: eine geschnittene Seitenansicht der Schutzkappe gemäß Fig. 8; und
- Fig. 11: ein weiteres Beispiel einer Schutzkappe mit darin integrierten Kontaktrohren, in geschnittener, schematischer Seitenansicht. Dieses Biespiel fällt nicht in Schutzumfang der Ansprüch.

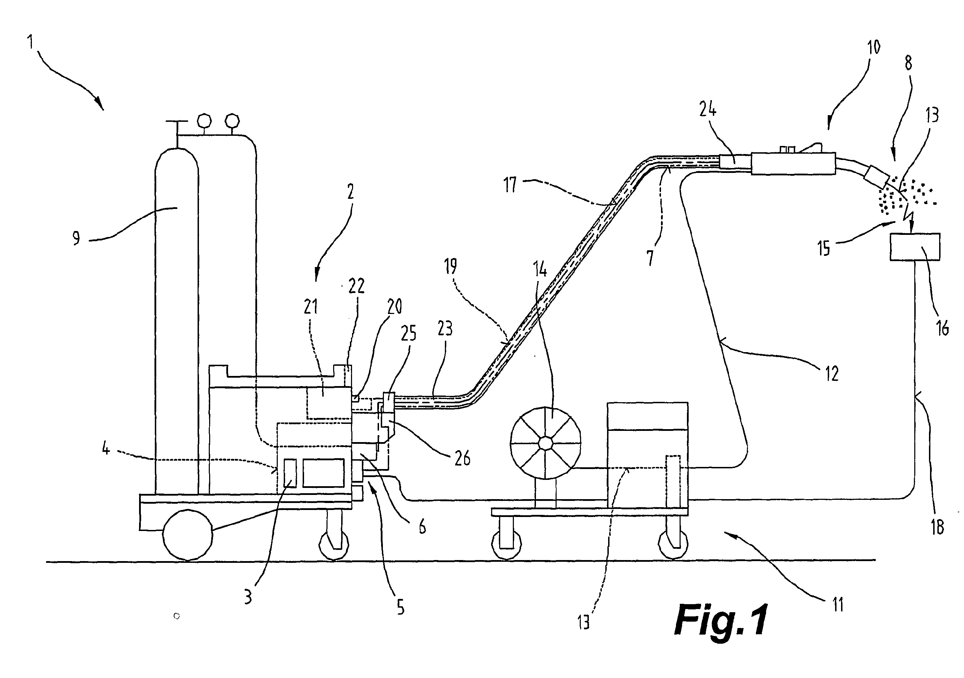

In Fig. 1 ist ein Schweißgerät 1 bzw. eine Schweißanlage für verschiedenste Schweißverfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt. Selbstverständlich ist es möglich, dass die erfindungsgemäße Lösung bei einer Stromquelle bzw. einer Schweißstromquelle eingesetzt werden kann.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle bzw. Schweißstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15 zwischen der abschmelzenden Elektrode bzw. dem Schweißdraht 13 und einem Werkstück 16 wird über eine Schweißleitung 17 vom Leistungsteil 3 der Stromquelle 2 dem Schweißbrenner 10 zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess an der Schweißstelle ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26 des Schweißgerätes 1 verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Wird beispielsweise ein Mehrdraht-Schweißprozess, insbesondere Doppeldraht-Schweißprozess, durchgeführt, so wird bevorzugt ein weiteres Schweißgerät 1 eingesetzt, wobei die beiden Schweißgeräte 1 dann mit einem gemeinsamen Schweißbrenner 10 verbunden sind, wie dies aus dem Stand der Technik bekannt ist. Hierzu sind die beiden Schweißgeräte 1 über Steuerleitungen verbunden, so dass eine entsprechende Synchronisation der beiden Schweißgeräte 1 erfolgen kann. Selbstverständlich ist es möglich, dass nur ein einziges Schweißgerät 1 verwendet wird, wobei dieses dann derart ausgebildet wird, dass zwei oder mehrere unabhängige Stromkreise aufgebaut werden können, um eine unabhängige Steuerung und Regelung der einzelnen Schweißprozesse zu erreichen.

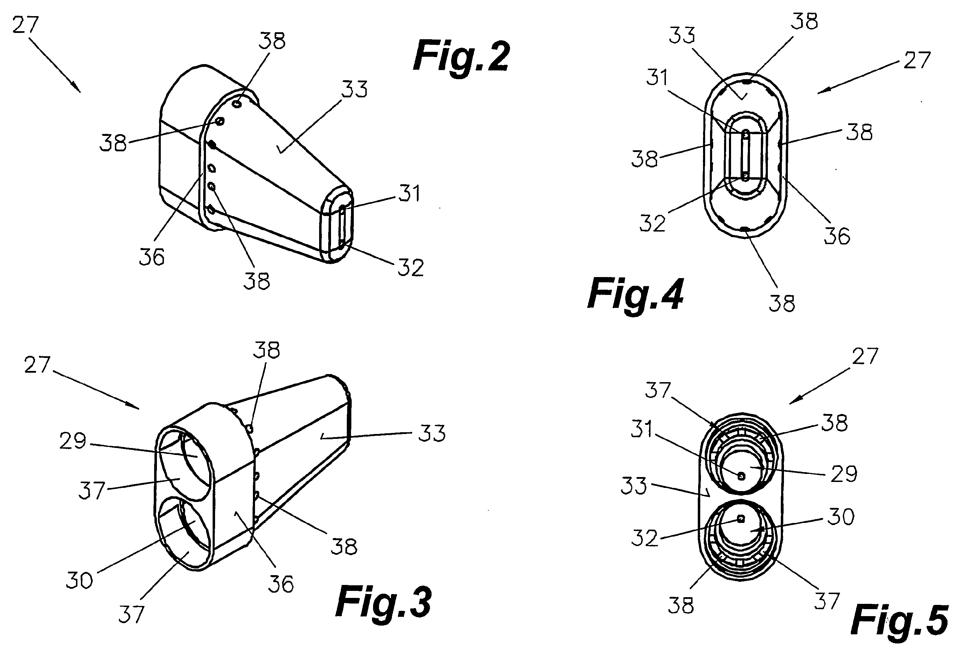

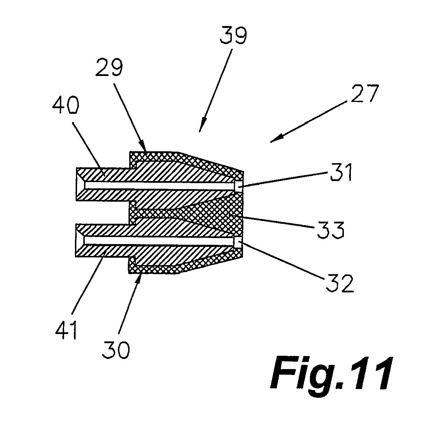

In den Fig. 2 bis 5 wird eine Ausführungsform einer Schutzkappe 27 gezeigt, welche in einem Schweißbrenner 10 mit zumindest zwei Kontaktrohren 40, 41 (siehe Fig. 11) eingesetzt wird. Die Kontaktrohre 40, 41 sind von einer gemeinsamen Gasdüse 28 umschlossen und weisen jeweils eine Bohrung für die Führung und Kontaktierung eines zugeführten Schweißdrahtes 13 auf. Das Kontaktrohr 40, 41, welches den Stromübergang zum Schweißdraht 13 bewerkstelligt, besteht vorzugsweise aus elektrisch leitendem Material, insbesondere aus Kupfer oder einer Kupferlegierung oder ist mit entsprechenden Kontaktierungen ausgestattet. Die Schutzkappe 27 wird über die Kontaktrohre 40, 41 oder über einen Teilbereich der Kontaktrohre 40, 41 aufgesteckt bzw. angeordnet. Hierzu weist die Schutzkappe 10 zwei Öffnungen 29, 30 zur Aufnahme der Kontaktrohre 40, 41 auf. Weiters sind Bohrungen 31, 32 in der Schutzkappe 27 angeordnet, die mit den Öffnungen 29, 30 zur Aufnahme der Kontaktrohre 40, 41 in Verbindung stehen. Die Bohrungen 31, 32 sind derart in der Schutzkappe 27 bzw. in einem Gehäuse 33 der Schutzkappe 27 angeordnet, dass diese bei eingesteckten Kontaktrohren 40, 41 fluchtend bzw. korrespondierend mit den Bohrungen der Kontaktrohre 40, 41 verlaufen, so dass ein zugeführter Schweißdraht 13 über die Bohrungen im Kontaktrohr 40, 41 und den Bohrungen 31, 32 in der Schutzkappe 27 zu einer Schweißstelle austreten kann. Bevorzugt wird die Schutzkappe 27 bei einem Einsatz in einem Mehrdraht-Schweißbrenner, insbesondere in einem Doppeldraht-Schweißbrenner 10 derart ausgebildet, dass im Gehäuse 33 der Schutzkappe 27 für jedes aufzunehmende Kontaktrohr eine eigene Öffnung 29, 30 und Bohrungen 31, 32 angeordnet sind. Damit kann eine exaktere Positionierung für den fluchtenden Übergang zwischen der Bohrung des Kontaktrohres und der Bohrung 31, 32 an der Schutzkappe 27 geschaffen werden, so dass eine reibungslose Drahtförderung gewährleistet werden kann.

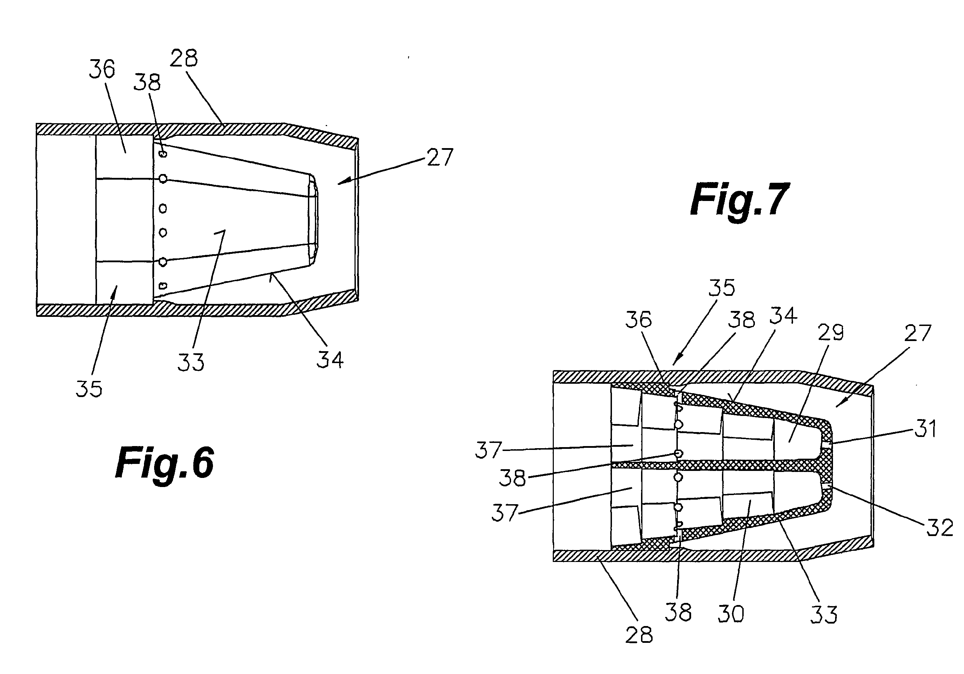

Die Schutzkappe 27, insbesondere das Gehäuse 33 der Schutzkappe 27, ist aus einem schlecht elektrisch leitenden Material mit schlechten Klebeeigenschaften von Metallspritzern, insbesondere Schweißspritzern, gebildet. Bevorzugt wird das Gehäuse 33 aus Keramik bzw. aus Materialien, welche mit Keramik beschichtet sind, gebildet. Durch den Einsatz eines elektrisch nicht leitenden Materials ist es möglich, dass die Schutzkappe 27 über mehrere Kontaktrohre 40, 41 gesteckt werden kann, ohne dass die Schutzkappe 27 einen Kurzschluss zwischen den einzelnen Kontaktrohren 40, 41 bildet. Durch das vollständige Abschließen der Kontaktrohre 40, 41 durch die Schutzkappe 27 im Endbereich, also im Bereich zur Schweißstelle, wird weiters in vorteilhafter Weise erreicht, dass auch gleichzeitig die Zwischenräume zwischen den einzelnen Kontaktrohren 40, 41 abgedeckt werden und somit das Ansammeln von Schweißspritzern in diesen Zwischenräumen verhindert werden kann. Würde nämlich, wie aus dem Stand der Technik bekannt, ein Kontaktrohr 40, 41 mit beschichteter Keramikfläche eingesetzt, so würden sich bei einer Anwendung derartiger Kontaktrohre 40, 41 bei einem Mehrdraht- bzw. Doppeldraht-Schweißbrenner die Schweißspritzer zwischen den Kontaktrohren 40, 41 sammeln können und somit zu einem Kurzschluss führen. Weiters können an einer Außenfläche 34 des Gehäuses 33 der Schutzkappe 27 Befestigungselemente 35 angeordnet sein, über die eine Klemm- oder Schraubverbindung mit der Gasdüse 28 herstellbar ist. Beispielsweise können die Befestigungselemente 35 durch zumindest einen Steg 36 gebildet sein, über den die Schutzkappe 27 mit der Gasdüse 28 in Verbindung steht und beim Aufstecken bzw. Befestigen der Gasdüse 28 auf den Schweißbrenner 10 gehalten wird. Dies wird schematisch in den Fig. 6 und 7 gezeigt. Selbstverständlich ist es möglich, dass die Schutzkappe 27 auf verschiedenste Weise am Schweißbrenner 10 befestigt wird.

Die Schutzkappe 27 kann eine weitere Öffnung 37 zur Aufnahme weiterer Elemente des Schweißbrenners 10, insbesondere einen Teilbereich eines Brennerkörpers (nicht dargestellt) mit dem darin befestigten Kontaktrohren aufweisen. Somit werden im Bereich der Gasdüse 28, also am Ende eines Brennerkörpers, sämtliche leitende Elemente des Schweißbrenners 10 von der Schutzkappe 27 abgedeckt. Die Schutzkappe 27 wird also über sämtliche elektrisch leitende Teile des Schweißbrenners 10 gesteckt, so dass aufgrund von eventuell in der Gasdüse 28 anhaftenden Schweißspritzern niemals ein Kurzschluss zwischen einem elektrisch leitenden Teil des Schweißbrenners 10 und der Gasdüse 28 auftreten kann. Durch eine derartige Ausbildung der Schutzkappe 27 ist es nunmehr notwendig, dass an der Schutzkappe 27 weitere Bohrungen 38 angeordnet sind, durch die das zugeführte Gas 8 vom Schweißbrenner 10 in den Innenraum der Gasdüse 28 austreten kann. Diese Bohrungen 38 können für die unterschiedlichsten Schweißbrenner 10 entsprechend korrespondierend mit den Gasaustrittsöffnungen am Schweißbrenner 10 im Gehäuse 33 der Schutzkappe 27 angeordnet sein. Bei dem dargestellten Ausführungsbeispiel sind am Gehäuse 33 radial umlaufende Bohrungen 38 angeordnet, über die das vom Schweißbrenner 10 zugeführtes Gas 8 in den Bereich zwischen der Gasdüse 28 und der Schutzkappe 27 austreten kann.

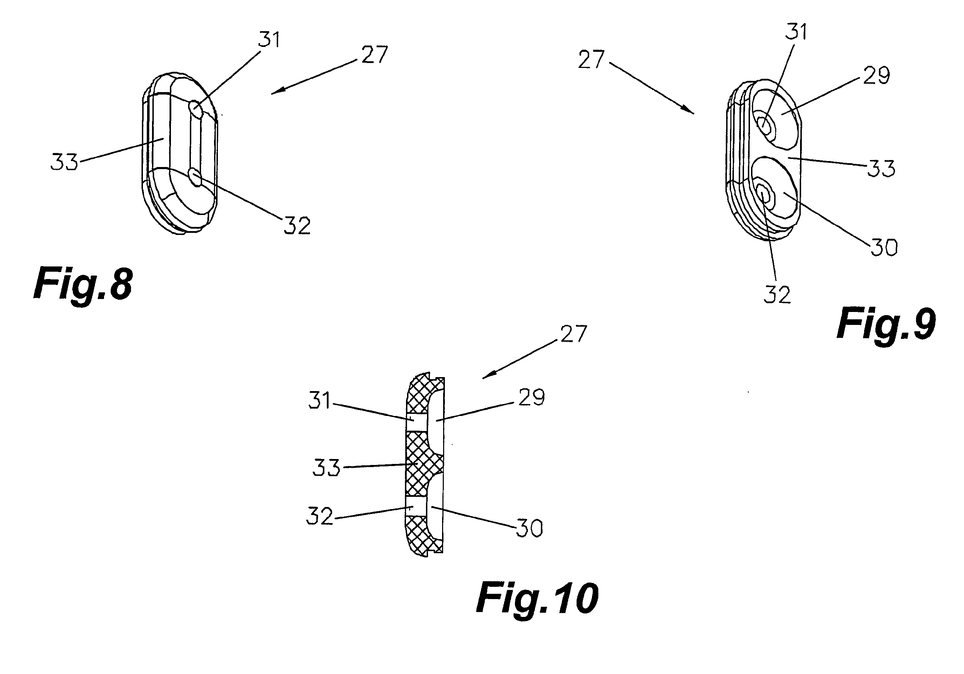

In den Fig. 8 bis 10 ist ein nicht erfindungsgemäßes Beispiel einer Schutzkappe 27 gezeigt. Zum Unterschied zur Ausführungsvariante gemäß den Fig. 2 bis 7 nimmt die Schutzkappe 27 nicht mehr die gesamten Kontaktrohre 40, 41 auf, sondern ist diese nur im Endbereich der Kontaktrohre 40, 41, also im Bereich zur Schweißstelle, angeordnet. Die Schutzkappe 27 bildet also eine Abdeckung der Enden der Kontaktrohre 40, 41.

Entsprechend der nicht-erfindungsgemäße Form gemäß Fig. 11 können die Schutzkappe 27 und die Kontaktrohre 40, 41 auch ein gemeinsames Sandwichbauteil 39 bilden. Dabei werden bei der Herstellung der Schutzkappe 27 die handelsüblichen Kontaktrohre 40, 41 in das Gehäuse 33 aus Keramik oder mit einer Keramikbeschichtung der Schutzkappe 27 eingebettet. Die Schutzkappe 27 mit den integrierten Kontaktrohren 40, 41 wird anschließend in den Schweißbrenner 10 eingesteckt bzw. daran befestigt, so dass eine elektrische Verbindung mit den Kontaktrohren 40, 41 geschaffen wird. Bei einer derartigen Ausbildung wird erreicht, dass die Schutzkappe 27 und die Kontaktrohre 40, 41 in einem Arbeitsschritt befestigt bzw. entnommen werden können. Dadurch wird ein sehr schneller und einfacher Tausch möglich. Der wesentliche Unterschied des Sandwichaufbaus gemäß Fig. 11 gegenüber dem Stand der Technik besteht darin, dass handelsübliche Kontaktrohre 40, 41 ohne Nachbearbeitung verwendet werden können, die lediglich bei der Herstellung der Schutzkappe 27 in diese eingebettet werden. Hingegen werden bei den bekannten Konstruktionen aufwendige Beschichtungsverfahren zum Auftragen einer Keramik-Schicht an den Kontaktrohren 40, 41 eingesetzt, resultierend in sehr hohen Herstellungskosten. Demgegenüber können die Herstellungskosten bei einem Sandwichbauteil 39 entsprechend Fig. 11 sehr gering gehalten werden.

Selbstverständlich sind die gezeigten Ausführungsbeispiele der Schutzkappe 27 nicht auf die dargestellten Formen beschränkt, sondern kann diese beliebig gestaltet werden. Eine weitere Ausgestaltung für eine Schutzkappe 27 mit zumindest zwei Kontaktrohren 40, 41 könnte auch derart erfolgen, dass die Schutzkappe 27 aus mehreren Teilen, insbesondere zwei Teilen, gebildet wird, wobei im Gehäuse 33 wiederum die Öffnung 29, 30 für die Kontaktrohre 40, 41 angeordnet ist. Dabei werden die Kontaktrohre 40, 41 in einen Teil der Schutzkappe 27 hineingesteckt und anschließend der zweite Teil der Schutzkappe 27 aufgesetzt, so dass die Konraktrohre 40, 41 vollständig im Inneren der Schutzkappe 27 integriert sind. Bevorzugt ragt hierbei ein Endbereich der Kontaktrohre 40, 41 aus der Schutzkappe 27 heraus, so dass die Kontaktrohre 40, 41 am Schweißbrenner 10 befestigt werden können und eine entsprechende elektrische Verbindung vom Schweißbrenner 10 zu den Kontaktrohren 40, 41 erreicht werden kann. Auf diese Weise kann die Schutzkappe 27 direkt an den Kontaktrohren 40, 41 befestigt werden, so dass bei einem Verschleiß der Kontaktrohre 40, 41 diese einfach ausgetauscht werden können.

Werden hingegen die Kontaktrohre 40, 41 vollständig in der Schutzkappe 27 integriert, ist die Schaffung einer Stromversorgung der Kontaktrohre 40, 41 erforderlich. Beispielsweise können Kontaktelemente in der Schutzkappe 27 integriert sein, die einerseits eine elektrische Verbindung zu den Kontaktrohren 40, 41 und andererseits eine elektrische Verbindung mit dem Schweißbrenner 10 herstellen (nicht dargestellt).

## Patentansprüche

1. Schutzkappe für zumindest zwei, jeweils eine Bohrung zur Führung und Kontaktierung jeweils eines zugeführten Schweißdrahtes (13) aufweisendes Kontaktrohr (40, 41) eines Schweißbrenners (10), umfassend ein Gehäuse (33), bestehend aus oder beschichtet mit einem elektrisch schlecht leitfähigen Material, zur Aufnahme der Kontaktrohre (40, 41), wobei im Gehäuse (33) zumindest zwei Öffnungen (29, 30) zur Aufnahme zumindest zweier Kontaktrohre (40, 41) und zumindest eine weitere Öffnung (37) zur Aufnahme weiterer Elemente des Schweißbrenners (10), insbesondere zur Aufnahme eines Teilbereichs eines Brennerkörpers mit den darin befestigten Kontaktrohren (40, 41), vorgesehen sind, **dadurch gekennzeichnet dass** jede Öffnung (29, 30) mit jeweils einer Bohrung (31, 32) für den Austritt des Schweißdrahtes (13) im Gehäuse (33) verbunden ist, und jede Bohrung (31, 32) so angeordnet ist, dass sie in montiertem Zustand der Schutzkappe (27) mit dem Verlauf des Schweißdrahtes (13) im Kontaktrohr (40, 41) übereinstimmt, sodass ein zugeführter Schweißdraht (13) über die Bohrungen jedes Kontaktrohres (40, 41) und jede Bohrung (30, 31) der Schutzkappe (27) zu einer Schweißstelle austreten kann, und dass an einer Außenfläche (34) des Gehäuses (33) Befestigungselemente (35) angeordnet sind, welche durch zumindest einen Steg (36) gebildet sind, über welchen eine Klemmverbindung mit einer Gasdüse (28) des Schweißbrenners (10) durch Aufstecken der Schutzkappe (27) herstellbar ist, wodurch im Bereich der Gasdüse (28), also am Ende des Brennerkörpers, sämtliche leitende Elemente des Schweißbrenners (10) von der Schutzkappe (27) abgedeckt werden, wobei am Gehäuse (33) Bohrungen (38) angeordnet sind, über die ein vom Schweißbrenner (10) zugeführtes Gas (8) in den Bereich zwischen Gasdüse (28) und Schutzkappe (27) austreten kann.

2. Schutzkappe nach Anspruch 1, **dadurch gekennzeichnet, dass** das Gehäuse (33) der Schutzkappe (27) aus einem Material mit geringer Klebeneigung von Metallspritzern gebildet ist.

3. Schutzkappe nach Anspruch 1, **dadurch gekennzeichnet, dass** das Gehäuse (33) der Schutzkappe (27) mit einem Material mit geringer Klebeneiguhg von Metallspritzern beschichtet ist.

4. Schutzkappe nach Anspruch 2 oder 3, **dadurch gekennzeichnet, dass** das Gehäuse (33) der Schutzkappe (27) aus Keramik gebildet ist.

5. Schutzkappe nach einem der Ansprüche 1 bis 4, **dadurch gekennzeichnet, dass** die Bohrungen (38) am Gehäuse (33) radial umlaufend angeordnet sind.

6. Schutzkappe nach einem der Ansprüche 1 bis 5, **dadurch gekennzeichnet, dass** zumindest ein Kontaktrohr (40, 41) im Gehäuse (33) integriert ist, so dass ein Sandwichbauteil (39) gebildet wird.

7. Schutzkappe nach Anspruch 6, **dadurch gekennzeichnet, dass** zumindest ein Kontaktrohr (40, 41) über einen Teilbereich im Gehäuse (33) eingebettet ist.

8. Schutzkappe nach Anspruch 6 oder 7, **dadurch gekennzeichnet, dass** die Kontaktrohre (40, 41) aus elektrisch leitendem Material, insbesondere aus Kupfer oder einer Kupferlegierung, gebildet sind und den Stromübergang zum Schweißdraht (13) bewirken.

9. Schweißbrenner mit zumindest zwei von einer gemeinsamen Gasdüse (28) umschlossenen Kontaktrohren (40, 41), wobei jedes Kontaktrohr (40, 41) eine Bohrung (31, 32) für die Führung und Kontaktierung eines zugeführten Schweißdrahtes (13) aufweist, **dadurch gekennzeichnet, dass** über den Kontaktrohren (40, 41) eine Schutzkappe (27) nach einem der Ansprüche 1 bis 8 angeordnet ist.

10. Schweißbrenner nach Anspruch 9, **dadurch gekennzeichnet, dass** die Kontaktrohre (40, 41) aus elektrisch leitendem Material gebildet sind und den Stromübergang zu den Schweißdrähten (13) bewirken.

11. Schweißbrenner nach Anspruch 10, **dadurch gekennzeichnet, dass** die Kontaktrohre (40, 41) aus Kupfer oder eine Kupferlegierung gebildet sind.

## Claims

1. A protective cap for at least two contact tubes (40, 41) of a welding torch (10) each provided with a bore for guiding and contacting a respectively fed welding wire (13), which protective cap includes a housing (33) made of, or coated with, a poorly electrically conductive material and adapted to receive said contact tubes (40, 41), wherein at least two openings (29, 30) for receiving at least two contact tubes (40, 41) and at least one further opening (37) for receiving further elements of the welding torch (10) and, in particular, for receiving a partial region of a torch body with the contact tubes (40, 41) fastened therein are provided in the housing (33), **characterized in that** each opening (29, 30) is connected with a respective bore (31, 32) provided in the housing (33) for exit of the welding wire (13), and each bore (31, 32) is arranged in a manner corresponding with the course of the welding wire (13) within the contact tube (40, 41) in the installed state of the protective cap (27), so as to enable a fed welding wire (13) to exit to a welding site through the bores of each contact tube (40, 41) and each bore (31, 32) of the protective cap (27), and that fastening elements (35) are arranged on an outer surface (34) of the housing (33), which are comprised of at least one web via which a clamping connection with a gas nozzle (28) of the welding torch (10) is enabled by slipping on the protective cap (27), thus causing all conductive elements of the welding torch (10) to be covered by the protective cap (27) in the region of the gas nozzle (28), i.e., on the end of the torch body, wherein bores (38) are arranged on the housing (33) via which a gas (8) fed by the welding torch (10) can exit into the region between the gas nozzle (28) and the protective cap (27).

2. A protective cap according to claim 1, **characterized in that** the housing (33) of the protective cap (27) is made of a material exhibiting a low tendency to metal spatter adherence.

3. A protective cap according to claim 1, **characterized in that** the housing (33) of the protective cap (27) is coated with a material exhibiting a low tendency to metal spatter adherence.

4. A protective cap according to claim 2 or 3, **characterized in that** the housing (33) of the protective cap (27) is made of ceramics.

5. A protective cap according to any one of claims 1 to 4, **characterized in that** said bores (38) are provided on the housing (33) in a radially peripheral manner.

6. A protective cap according to any one of claims 1 to 5, **characterized in that** at least one contact tube (40, 41) is integrated in the housing (33) so as to form a sandwich component (39).

7. A protective cap according to claim 6, **characterized in that** at least one contact tube (40, 41) is embedded in the housing (33) over a partial region.

8. A protective cap according to claim 6 or 7, **characterized in that** the contact tubes (40, 41) are made of an electrically conductive material, particularly copper or a copper alloy, thus providing current transfer to the welding wire (13).

9. A welding torch including at least two contact tubes (40, 41) enclosed by a common gas nozzle (28), wherein each contact tube (40, 41) has a bore (31, 32) for guiding and contacting a respectively fed welding wire (13), **characterized in that** a protective cap (27) according to any one of claims 1 to 8 is placed over the contact tubes (40, 41).

10. A welding torch according to claim 9, **characterized in that** the contact tubes (40, 41) are made of an electrically conductive material, thus providing current transfer to the welding wires (13).

11. A welding torch according to claim 10, **characterized in that** the contact tubes (40, 41) are made of copper or a copper alloy.

## Revendications

1. Couvercle protecteur pour au moins deux tuyaux de contact (40, 41) d'un chalumeau de soudage (10) présentant chacun un alésage destiné à guider et mette en contact respectivement un fil acheminé (13), comprenant un logement (33), constitué de ou recouvert d'un matériau électriquement peu conducteur, pour loger les tuyaux de contact (40, 41), au moins deux ouvertures (29, 30) pour loger au moins deux tuyaux de contact (40, 41) et au moins une autre ouverture (37) pour loger d'autres éléments du chalumeau de soudage (10) en particulier pour loger une partie d'un corps de chalumeau avec les tuyaux de contact (40, 41) fixés à l'intérieur, étant prévues dans le logement (33), **caractérisé en ce que** chaque ouverture (29,30) est connectée respectivement avec un alésage (31,32) pour la sortie du fil (13) dans le logement (33), et chaque alésage (31, 32) est agencé de sorte qu'il correspond dans un état monté du couvercle protecteur (27) à la continuité du fil (13) dans le tuyau de contact (40, 41), de sorte qu'un fil (13) acheminé peut sortir par les alésages de chaque tuyau de contact (40, 41) et chaque alésage (30, 31) du couvercle protecteur (27) vers un lieu de soudure, et **en ce que** des éléments de fixation (35) sont agencés au niveau d'une surface extérieure (34) du logement (33), lesquels sont formés d'au moins un talon (36), par lequel une jonction par serrage avec une tuyère à gaz (28) du chalumeau de soudage (10) peut être établie par fixation du couvercle protecteur (27), moyennant quoi dans la zone de la tuyère à gaz (28), c'est-à-dire à l'extrémité du corps de chalumeau, tous les éléments conducteurs du chalumeau de soudage (10) sont recouverts du couvercle protecteur (27), des alésages (38) étant agencés au niveau du logement (33), au travers desquels un gaz (8) amené du chalumeau de soudage (10) peut sortir dans la zone comprise entre la tuyère à gaz (28) et le couvercle protecteur (27).

2. Couvercle protecteur selon la revendication 1, **caractérisé en ce que** le logement (33) du couvercle protecteur (27) est constitué d'un matériau ayant des caractéristiques de collage de pointes métalliques faibles.

3. Couvercle protecteur selon la revendication 1, **caractérisé en ce que** le logement (33) du couvercle protecteur (27) est revêtu d'un matériau ayant des caractéristiques de collage de pointes métalliques faibles.

4. Couvercle protecteur selon la revendication 2 ou 3, **caractérisé en ce que** le logement (33) du couvercle protecteur (27) est constitué de céramique.

5. Couvercle protecteur selon l'une quelconque des revendications 1 à 4, **caractérisé en ce que** les alésages (38) au niveau du logement (33) sont disposés de manière circonférentielle et radiale.

6. Couvercle protecteur selon l'une quelconque des revendications 1 à 5, **caractérisé en ce qu'**au moins un tuyau de contact (40, 41) est intégré dans le logement (33), de sorte qu'une pièce en sandwich (39) est formée.

7. Couvercle protecteur selon la revendication 6, **caractérisé en ce qu'**au moins un tuyau de contact (40, 41) est encastré dans une partie du logement (33).

8. Couvercle protecteur selon la revendication 6 ou 7, **caractérisé en ce que** les tuyaux de contact (40, 41) sont constitués d'un matériau électriquement conducteur, en particulier de cuivre ou d'un alliage de cuivre, et provoquent le passage du courant vers le fil (13).

9. Chalumeau de soudage comportant au moins deux tuyaux de contact (40, 41) entourés d'une tuyère à gaz (28) commune, chaque tuyau de contact (40, 41) présentant un alésage (31, 32) pour le guidage et la mise en contact d'un fil (13) acheminé, **caractérisé en ce qu'**un couvercle protecteur (27) selon l'une quelconque des revendications 1 à 8 est disposé sur les tuyaux de contact (40, 41).

10. Chalumeau de soudage selon la revendication 9, **caractérisé en ce que** les tuyaux de contact (40, 41) sont constitués d'un matériau électriquement conducteur et provoquent le passage du courant vers les fils (13).

11. Chalumeau de soudage selon la revendication 10, **caractérisé en ce que** les tuyaux de contact (40, 41) sont constitués de cuivre ou d'un alliage de cuivre.
